# EUROPEAN PATENT SPECIFICATION

(11) **EP 2 469 725 B1**
(45) Date of publication and mention of the grant of the patent: **16.03.2016**
(21) Application number: 09848416.5
(22) Date of filing: 24.12.2009
(51) Int. Cl.: H04B 7/04, H04B 1/48, H04B 1/04

(54) **MULTIPLE-INPUT MULTIPLE-OUTPUT SYSTEM AND METHOD**
MIMO-SYSTEM UND VERFAHREN
SYSTÈME ET PROCÉDÉ ENTRÉE MULTIPLE/SORTIE MULTIPLE

(30) Priority: 17.08.2009 CN 200910166141
(43) Date of publication of application: 27.06.2012
(73) Proprietor: ZTE Corporation, Shenzhen, Guangdong 518057 (CN)
(72) Inventor: YAN, Peng, Shenzhen Guangdong 518057 (CN); JI, Songtao, Shenzhen Guangdong 518057 (CN); QIN, Yufeng, Shenzhen Guangdong 518057 (CN)
(74) Representative: Raunecker, Klaus Peter
(86) International application number: PCT/CN2009/075937
(87) International publication number: WO 2011/020275

(56) References cited:
- WO-A1-2007/129716
- CN-A- 101 103 524
- CN-A- 101 640 562
- US-B1- 6 711 392

## Description

### TECHNICAL FIELD

The present disclosure relates to a Multi-Input Multi-Output (MIMO) technology and particularly to an MIMO system and method.

### BACKGROUND

With the rapid development of Wireless Local Area Network (WLAN) technology, MIMO technology has begun to be applied in this field. Due to its capability of supporting MIMO and being compatible with the former IEEE 802.11 b/g, the latest standard IEEE 802.11 n Draft 6.0 will provide a data service with higher bandwidth. Two types of WLAN Access Points (WLAN AP), that is, outdoor AP and indoor AP, are commonly featured with high transmission power, which is generally more than 500mw so as to achieve a larger coverage area. Outdoor AP and indoor AP adopt the same architecture, that is, a wireless network card plus an external bidirectional Power Amplifier (PA).

For the products in the market, the standard IEEE 802.11 n generally supports a 2x2 Multi-Input Multi-Output (MIMO) system, for the 2×2 MIMO system, a power amplifier typically uses two amplifiers together simply. This simple use of two amplifiers leads to the following two disadvantages: firstly, for the original IEEE 802.11 b/g and a single-path MIMO form (e.g. the rates such as MCS 0-7 defined by IEEE 802.11 n Draft), there is only one PA being at work, while the other PA is in an idle state, thus causing a resource waste; secondly, a higher transmission power is required by the outdoor AP and indoor AP to reduce power consumption and enlarge coverage area.

Existing patent documents include: Chinese Patent Application No.CN200710037633, entitled "balanced power amplifier based on 90° branch line mixed bridge", European Patent Application No.WO2008117400(A1), entitled "Wireless transmission apparatus", and "Design and realization of 2.4 G radio frequency power amplifier [J], Global Electronics China, 2007,(5):46-49".

Chinese Patent Application No.CN200710037633 has just provided a circuit of a balanced power amplifier, but neither relates to a method for a multi-input multi-output system to improve efficiency and enhance output power, nor refers to a method for enhancing transmission power and increasing the utilization rate of a power amplifier using a balanced power amplifier in the condition of a low rate. This application does not refer to a switching control method or a switching realization circuit.

European Patent Application No.WO2008117400 (A1) has proposed a power amplifier of an orthogonal two-path communication system, which combines two paths of power into a high power in the condition of a high power (for a GSM/EGDE, with PA being in a nonlinear state), and amplifies two orthogonal paths of power in the condition of a small power (for a UMTS/3G-LTE, with PA being in a linear state) and then transmits the amplified powers separately. However, this patent has made no reference to switching power amplification modes in a multi-output mode according to different rates and multi-input multi-output mode or further enhancing the transmission power using a power combination technology while ensuring the normal amplifying of signals in the condition of a high rate and multiple paths.

The "Design and realization of 2.4 G radio frequency power amplifier [J], Global Electronics China, 2007,(5):46-49" has proposed the structure and design of a wireless power amplifier of a WLAN802.11b/g WLAN but neither made reference to the application of MIMO, nor made reference to a method for enhancing the transmission power and increasing the utilization rate of a power amplifier using a balanced power amplifier in the condition of a low rate, let alone proposed a switching control method or a switching realization circuit.

### SUMMARY

In view of the aforementioned one or more problems, the present disclosure provides a multi-input multi-output system and method, which are capable of carrying out a power amplification mode switching according to different rates and multi-input multi-output mode and enhancing transmission power using a power combination technology while ensuring the normal amplifying for signals in the condition of high rate and multiple paths.

In accordance with one aspect of the present disclosure, there is provided a multi-input multi-output system, comprising:
a first directional coupler and a second directional coupler, one of which is arranged to direct the signals to a splitter in the case where signals are sent out by the multi-input multi-output system in a single path;
a splitter arranged to split the signals from the first directional coupler or the second directional coupler into two paths and send the two paths of signals to a first amplifier and a second amplifier respectively;
the first amplifier and the second amplifier, which are arranged to amplify the signals received respectively and send the amplified signals to a combiner respectively; and
the combiner arranged to combine the signals received from the first amplifier and the second amplifier and send the combined signals.

The system may further comprise:
a first antenna and a second antenna, one of which is arranged to send the signals combined by the combiner.

In the case where the multi-input multi-output system receives signals, the signals are received through the first antenna and/or the second antenna, the system may further comprise:
a first low noise amplifier arranged to carry out a low noise amplification for the signals received by the first antenna and send the amplified signals to the first directional coupler; and
a second low noise amplifier arranged to carry out a low noise amplification for the signals received by the second antenna and send the amplified signals to the second directional coupler.

In the case where the multi-input multi-output system sends out signals in multiple paths,
the first directional coupler may be further arranged to send a first signal to the first amplifier, and the second directional coupler may be further arranged to send a second signal to the second amplifier;
the first amplifier may be further arranged to amplify the received first signal and send the amplified signal to the first antenna, and the second amplifier may be further arranged to amplify the received second signal and send the amplified signal to the second antenna; and
the first antenna may be further arranged to send out the amplified first signal, and the second antenna may be further arranged to send out the amplified second signal.

The system may further comprise:
a mode determining module arranged to determine, according to the signals from the first directional coupler and the second directional coupler, which one of states consisting of a single-path signal-sending state, a signal-receiving state of the multi-input multi-output system and a multi-path signal-sending state the multi-input multi-output system is in.

The mode determining module may comprise a first detector, a second detector and a logic module, wherein
the first detector arranged to detect the output of the first directional coupler and send a detection result to the logic module;
the second detector arranged to detect the output of the second directional coupler and send a detection result to the logic module; and
the logic module arranged to determine, according to the detection results from the first detector and second detector, which one of states consisting of a single-path signal-sending state, a signal-receiving state of the multi-input multi-output system and a multi-path signal-sending state the multi-input multi-output system is in.

A multi-input multi-output method comprises the following steps:
in the case where signals are sent out by the multi-input multi-output system in a single path, one of a first directional coupler and a second directional coupler directs the signals to a splitter;
the splitter splits the signals into two paths and sends the two paths of signals to a first amplifier and a second amplifier respectively;
the first amplifier and second amplifier respectively amplify the signals received and send the amplified signals to a combiner;
the combiner combines the signals from the first amplifier and the second amplifier; and
one of a first antenna and a second antenna sends out the signals combined by the combiner.

In the case where the multi-input multi-output system receives signals, the method may further comprise:
the first antenna and/or the second antenna receive(s) the signals;
a first low noise amplifier carries out a low noise amplification for the signals received by the first antenna and sends the amplified signals to the first directional coupler; and
a second low noise amplifier carries out a low noise amplification for the signals received by the second antenna and sends the amplified signals to the second directional coupler.

In the case where the multi-input multi-output system sends out signals in multiple paths, the method may further comprise the following steps:
the first directional coupler sends a first signal to the first amplifier, and the second directional coupler sends a second signal to the second amplifier;
the first amplifier amplifies the first signal and sends the amplified signal to the first antenna, and the second amplifier amplifies the second signal and sends the amplified signal to the second antenna; and
the first antenna sends the amplified first signal, and the second antenna sends the amplified second signal.

Before the above-mentioned steps, the method further comprises a step of:
determining, according to the signals from the first directional coupler and second directional coupler, which one of states consisting of a single-path signal-sending state, a signal-receiving state of the multi-input multi-output system and a multi-path signal-sending state the multi-input multi-output system is in.

The multi-input multi-output system and method provided in the present disclosure realize a power amplification mode switching according to different rates and the multi-input multi-output mode and further enhance transmission power using a power combination technology while ensuring the normal amplifying for signals in the condition of high rate and multiple paths.

Additional features and advantages of the disclosure will be set forth in the description which follows, and in part will be apparent from the description, or may be understood by performing the disclosure. The object and other advantages of the disclosure can be realized by and obtained from the structures especially illustrated in the specification, claims and the accompanying drawings.

### BRIEF DESCRIPTION OF THE DRAWINGS

The accompanying drawings illustrated herein are provided for a better understanding of the present disclosure and form a part of this application, and the exemplary embodiments of the present disclosure and the description thereof are for explaining the disclosure but not limiting the disclosure inappropriately. In the accompanying drawings:
Fig. 1 is a schematic diagram of an embodiment of a multi-input multi-output system for improving efficiency and enhancing output power disclosed in the present disclosure;
Fig. 2 is a flow chart of an embodiment of a multi-input multi-output method disclosed in the present disclosure;
Fig. 3 is a schematic diagram of another embodiment of a multi-input multi-output system disclosed in the present disclosure.

### DETAILED DESCRIPTION

Detailed description of the disclosure will be described below in detail with reference to accompanying drawings.

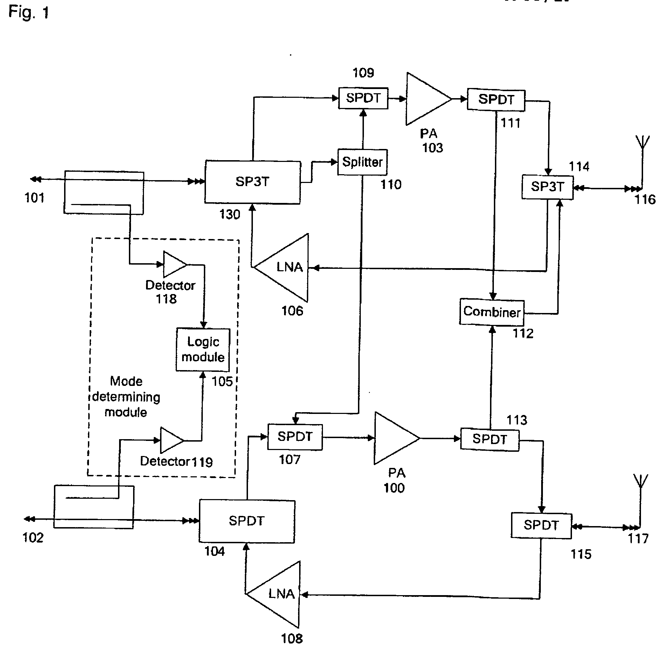

Fig. 1 is a schematic diagram of an embodiment of the multi-input multi-output system for improving efficiency and enhancing output power disclosed in the present disclosure. As show in Fig. 1,the system comprises:
a first directional coupler 101 and a second directional coupler 102, one of which is used for directing the signals to a splitter 110 in the case where the signal is sent by the multi-input multi-output system in a single path, it should be noted here that although there is just shown in Fig. 1 a case of the connection of the first directional coupler 101 with the splitter, in fact, the second directional coupler 102 can also be connected with the splitter 110;
the splitter 110 for splitting the signals into two paths and sending the two paths of signals to a first amplifier 103 and a second amplifier 100 respectively;
the first amplifier 103 and the second amplifier 100, which are used for amplifying the signals received and sending the amplified signals to a combiner 112 respectively; and
a combiner 112 for combining the signals from the first amplifier 103 and the second amplifier 100 and sending out the combined signals.

The multi-input multi-output system shown in Fig. 1 further comprises: a first antenna 116 and a second antenna 117, one of which is used for sending out the signals combined by the combiner 112, it should be noted here that although there is just shown in Fig. 1 a case that the combiner 112 sends the combined signals to the first antenna 116, in fact, the combiner 112 can also send the combined signals to the second antenna 117 by being connected to the second antenna 117.

Wherein, in the case where the multi-input multi-output system receives signals, signals are received through the first antenna 116 and/or the second antenna 117, the system further comprises: a first Low Noise Amplifier (LNA) 106 for carrying out a low noise amplification for the signals received by the first antenna 116 and then sending the amplified signals to the first directional coupler 101, and a second low noise amplifier 108 for carrying out a low noise amplification for the signals received by the second antenna 117 and then sending the amplified signals to the second directional coupler 102.

Wherein, in the case where the multi-input multi-output system sends out signals in multiple paths, the first directional coupler 101 is used for sending a first signal to the first amplifier 103; the second directional coupler 102 is used for sending a second signal to the second amplifier 100; the first amplifier 103 is used for amplifying the first signal and sending the amplified signal to the first antenna 116; the second amplifier 100 is used for amplifying the second signal and sending the amplified signal to the second antenna 117; and the first antenna 116 is used for sending out the first signal amplified, and the second antenna 117 is used for sending out the second signal amplified.

The multi-input multi-output system further comprises: a mode determining module for determining, according to the signals from the first directional coupler 101 and the second directional coupler 102, which one of states consisting of a single-path signal-sending state (that is, a high power transmission mode), a signal-receiving state of the multi-input multi-output system and a multi-path signal-sending state the multi-input multi-output system is in.

Wherein, the mode determining module comprises a first detector 118 for detecting the output of the first directional coupler and sending the detection result to a logic module 105; a second detector 119 for detecting the output of the second directional coupler and sending the detection result to the logic module 105; and the logic module 105 for determining, according to the detection results of the first detector 118 and the second detector 119, which one of states consisting of a single-path signal-sending state, a signal-receiving state of the multi-input multi-output system and a multi-path signal-sending state the multi-input multi-output system is in.

The functions of the components of the multi-input multi-output system disclosed in the present disclosure are as follows:
the directional couplers 101 and 102 which perform outputting using a cooperative detector circuit, detect whether there is a power signal output using the output of;
the detectors 118 and 119 are used to detect the output of the directional couplers and provide levels to a logic unit for determining;
SPDT 104, SPDT 109, SPDT 107 and SPDT 113 are used to carry out a signal path switching;
PA 103 and PA110 are used to amplify the signal power;
LNA 106 and LNA 108 are used to amplify the low noise power;
the logic module (also called a logic control) 105 is used for logic control of a circuit;
SP3T130 and SP3T114 are single-pole three-throw switches, which are used to carry out a signal path switching;
the splitter 110 is used to split the power signals into two paths; and
the combiner 112 is used to combine the power signals into one path.

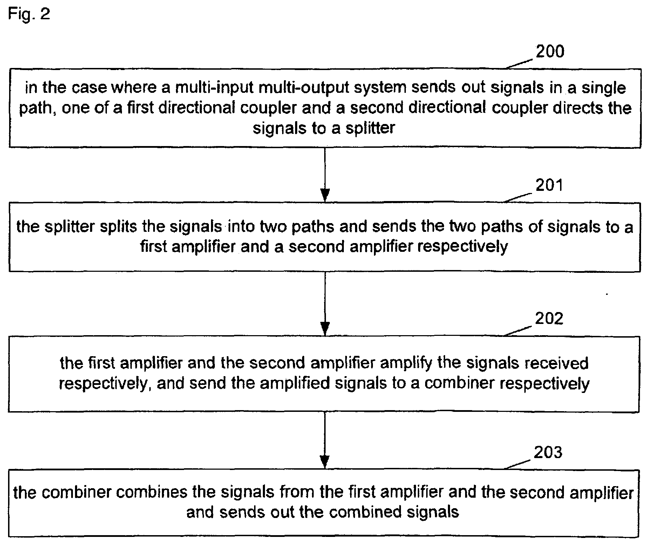

Fig. 2 is a flow chart of an embodiment of the multi-input multi-output method disclosed in the present disclosure. As show in Fig. 2, this method comprises the following steps:
step 200: in the case where a multi-input multi-output system sends out signals in a single path, one of a first directional coupler and second directional coupler directs the signals to a splitter;
step 201: the splitter splits the signals into two paths and sends the two paths of signals to a first amplifier and a second amplifier respectively;
step 202: the first amplifier and the second amplifier amplify the signals received and send the amplified signals to a combiner respectively;
and step 203: the combiner combines the signals from the first amplifier and the second amplifier and sends out the combined signals.

The multi-input multi-output method in the present disclosure further comprises the step that one of a first antenna and a second antenna sends out the signal combined by the combiner.

The multi-input multi-output method in the present disclosure further comprises the following steps that: in the case where the multi-input multi-output system receives signals, the signals are received through the first antenna and/or the second antenna; a first low noise amplifier carries out a low noise amplification for the signal received by the first antenna and sends the amplified signal to the first directional coupler; and a second low noise amplifier carries out a low noise amplification for the signal received by the second antenna and sends the amplified signal to the second directional coupler.

The multi-input multi-output method in the present disclosure further comprises the following steps: in the case where the multi-input multi-output system sends out signals in multiple paths, the first directional coupler sends a first signal to the first amplifier, and the second directional coupler sends a second signal to the second amplifier; the first amplifier amplifies the first signal and sends the amplified signal to the first antenna; the second amplifier amplifies the second signal and sends the amplified signal to the second antenna; and the first antenna sends out the first signal amplified, and the second antenna sends out the second signal amplified.

The multi-input multi-output method in the present disclosure further comprises the step of determining, according to the signals from the first directional coupler and the second directional coupler, which one of states consisting of a single-path signal-sending state, a signal-receiving state of the multi-input multi-output system and a multi-path signal-sending state the multi-input multi-output system is in.

The present disclosure comprises a two-path bidirectional power amplifier, which is used for amplifying two paths of input low power signals via PAs respectively when sending signals, that is, being in an MIMO mode, and then sending the amplified signals to the antenna apparatus to realize a wireless transmission coverage in a larger area; and receiving two paths of signals that is, being in a receiving mode, and then amplifying the received signals via an LNA to realize a reception of a lower reception sensitivity. Meanwhile, the logic module is responsible for switching radio frequency switches to realize a switching between receiving and sending.

Further, the logic module detects whether an input signal is a single-path signal or a two-path signal and enters into a high power mode if the input signal is a single-path signal. A splitter splits the single-path signals into two paths of signals and sends the two paths of signals to two PAs to amplify the signals respectively, and then a combiner combines the two paths of signals into one path and sends out the one path of signal via the antenna.

Further, the logic module can detect and control the entrance of the power amplifier into a high power mode, an MIMO transmission mode and a receiving mode and display the switching among the modes without an extra control signal.

In accordance with an embodiment of the present disclosure, a multi-input multi-output method for improving the efficiency and enhancing output power comprises the following steps of: detecting an input signal to determine whether the input signal is a two-path signal or a single-path signal; and if the input signal is a two-path signal, entering into an MIMO mode so that two PAs can respectively carry out a power amplification for the two paths of input signals, sending the amplified signals to an antenna, and continuing to detect the input signal;
or if the input signal is a single-path signal, entering into a high power mode to split the single-path signals into two paths, sending the two paths of signals to two PAs for amplification, combining the two paths of amplified signals into one path, sending the one path of signal to an antenna, and continuing to detect the input signal;
if there is no signal detected, that is, PAs are all closed, entering into a receiving mode to receive signals of two antennas; the signals are sent to two paths for reception respectively; and the input signals are continued to be detected.

Referring to Fig. 1 again, the multi-input multi-output method disclosed in the present disclosure comprises:
step A: a multi-input multi-output system enters into an MIMO transmission mode, in which outputs of two paths are respectively sent to a directional coupler 101 and a directional coupler 102;
step B: a detector 118 and a detector 119 output two same level signals to a logic module 105, which generates the control signals of SPDT 104, SPDT 107, SPDT 109, SPDT 111, SPDT 115 as well as SP3T 130 and SP3T 114 respectively;
step C: the outputs of the direct ends of the directional coupler 101 and directional coupler 102 enter into SPDT 109 and SPDT 107 via SP3T 130 and SPDT 104 respectively;
step D: signals enter into PA 103 and PA100 via SPDT 109 and SPDT 107 respectively and then are amplified, and the amplified signals enter into SP3T 114 and SPDT 115 and then are sent out by antennas;
step E: the multi-input multi-output system enters into a high power transmission mode, in which only 802.11 b/g and 802.11 n MCS 0-7 are input and single-path signals enter into the directional coupler 101;
step F: the output of the directional coupler 101 enters into the splitter 110 via SP3T 130;
step G: the splitter splits signals into two paths and then sends the two paths of signals to SPDT 109 and SPDT 107 respectively, and then the two paths of signals are respectively enter into PA 103 and PA 100;
step H: two paths of PA signals pass SPDT 111 and SPDT 113 and are combined by the combiner112 and then sent to SP3T 114;
step I: the combined signals are sent out by an antenna via SP3T 114;
step J: the multi-input multi-output system enters into a receiving mode, and the logic module 105 enters into a receiving mode and generates the control signals of SPDT 104, SPDT 107, SPDT 109, SPDT 111, SPDT 115, SP3T 130 and SP3T114 respectively; and
step K: the signals received by the antennae are respectively enter into LNA 106 and LNA 108 via SP3T 114 and SPDT 115 and then are sent to SP3T 130 and SPDT 104 and finally sent to the receiving end of a network card from the directional coupler 101 and directional coupler 102.

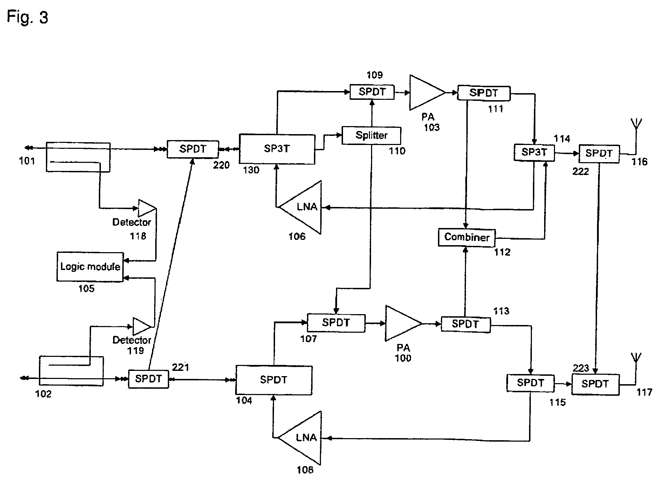

In the case where a single path is optionally sent to the first coupler or second coupler, system shown in Fig. 3 can be adopted. As shown in Fig. 3, SPDT 220, SPDT 221, SPDT 222 and SPDT 223 are added on the basis of the system in the Fig. 1. A mode determining module performs detection and determine whether there is a signal input from the first directional coupler 101 or the second directional coupler 102, generates a control signal and sends a single-path signal to a splitter 110. After being amplified by the first amplifier 103 and the second amplifier 100, signals are combined and then sent out from the corresponding antenna where the signals are input. Wherein, the logical module 105 determines which one of the paths has a signal input and generates the control signals of SPDT 220, SPDT 221, SPDT 222 and SPDT 223. If a signal is input from the first directional coupler 101, the signal enters into the splitter 110 via SPDT 220 and is then split into two paths and amplified, the two paths of amplified signals are combined into one path by a combiner 112 and then sent out from an antenna 116 via SPDT 222; and if a signal is input from the second directional coupler 102, the signal enters into the splitter 110 via SPDT 221 and is then split into two paths and amplified, the two paths of amplified signals are combined into one path by the combiner 112, and the combined signal passes SPDT 222 and is then sent out from an antenna 116 via SPDT 223. In this way, the input in an optional single path is amplified in power and then output.

Compared with the related technologies, the present disclosure, by introducing a balanced power amplifier structure, on the one hand, ensures the normal amplifying of multi-input multi-output signals and achieving the same function and performance index as the related technologies and, on the other hand, obtains the extra 3dB gain for single-path signals of 802.11b/g/802.11n mcs 0-7 etc., and still obtains a 2dB gain even in consideration of the loss of SPDT switches and combiners. So the present disclosure enhances the transmission power, and enlarges the coverage area. In addition, the cost is very low without adding extra PAs and the present disclosure is easily implemented.

Above mentioned are only preferred embodiments of the disclosure and are not used for limiting the disclosure. For those skilled in the art, the disclosure may have various alternations and changes. Any modifications, equivalent substitutes and improvements etc,. which are made within the spirit and principle of the disclosure shall be contained within the protection scope of the disclosure.

## Claims

1. A multi-input multi-output system, comprising:
a first directional coupler (101) and a second directional coupler (102), one of which is arranged to direct signals to a splitter (110) in the case where signals are sent out by the multi-input multi-output system in a single path;
the splitter (110) arranged to split the signals from the first directional coupler (101) or the second directional coupler (102) into two paths and send the two paths of signals to a first amplifier (103) and a second amplifier (100) respectively;
the first amplifier (103) and the second amplifier (100), which are arranged to amplify the signals received respectively and send the amplified signals to a combiner (112), respectively; and
the combiner (112) arranged to combine the signals received from the first amplifier (103) and the second amplifier (100) and send the combined signals.

2. The system according to claim 1, further comprising:
a first antenna (116) and a second antenna (117), one of which is arranged to send the signals combined by the combiner (112).

3. The system according to claim 2, wherein in the case where the multi-input multi-output system receives signals, the signals are received through the first antenna (110) and/or the second antenna (117), the system further comprises:
a first low noise amplifier 106) arranged to carry out a low noise amplification for the signals received by the first antenna (116) and send the amplified signals to the first directional coupler (101); and
a second low noise amplifier (108) arranged to carry out a low noise amplification for the signals received by the second antenna (117) and send the amplified signals to the second directional coupler (102).

4. The system according to claim 2, wherein in the case where the multi-input multi-output system sends out signals in multiple paths,
the first directional coupler (101) is further arranged to send a first signal to the first amplifier (103), and the second directional coupler (102) is further arranged to send a second signal to the second amplifier (100);
the first amplifier (103) is further arranged to amplify the received first signal and send the amplified signal to the first antenna (116), and the second amplifier (100) is further arranged to amplify the received second signal and send the amplified signal to the second antenna (117); and
the first antenna (116) is further arranged to send out the amplified first signal, and the second antenna (117) is further arranged to send out the amplified second signal.

5. The system according to any of claims 1-4, further comprising:
a mode determining module arranged to determine, according to the signals from the first directional coupler (101) and the second directional coupler (102), which one of states consisting of a single-path signal-sending state, a signal-receiving state of the multi-input multi-output system and a multi-path signal-sending state the multi-input multi-output system is in.

6. The system according to claim 5, wherein the mode determining module comprises a first detector (118), a second detector (119) and a logic module (105), wherein
the first detector (118) arranged to detect output of the first directional coupler (101) and send a detection result to the logic module (105);
the second detector (119) arranged to detect output of the second directional coupler (102) and send a detection result to the logic module (105); and
the logic module (105) arranged to determine, according to the detection results from the first detector (118) and the second detector (119), which one of states consisting of a single-path signal-sending state, a signal-receiving state of the multi-input multi-output system and a multi-path signal-sending state the multi-input multi-output system is in.

7. A multi-input multi-output method, comprising the following steps:
in the case where signals are sent out by a multi-input multi-output system in a single path, directing the signals to a splitter (110) by one of a first directional coupler (101) and a second directional coupler (102);
splitting the signals into two paths by the splitter (110) and sending the two paths of signals to a first amplifier (103) and a second amplifier (100) respectively;
amplifying the received signals by the first amplifier (103) and the second amplifier (100) respectively, and sending the amplified signals to a combiner (112);
combining the signals from the first amplifier (103) and the second amplifier (100) by the combiner (112); and
sending out, by one of a first antenna (116) and a second antenna (114), the signals combined by the combiner (112).

8. The method according to claim 7, further comprising: wherein in the case where the multi-input multi-output system receives signals,
receiving the signals by the first antenna (116) and/or the second antenna (117);
carrying out, by a first low noise amplifier (106), a low noise amplification for the signals received by the first antenna (116) and sending the amplified signals to the first directional coupler (101); and
carrying out, by a second low noise amplifier (108), a low noise amplification for the signals received by the second antenna (117) and sending the amplified signals to the second directional coupler (102).

9. The method according to claim 7, further comprising: wherein in the case where the multi-input multi-output system sends out signals in multiple paths,
sending a first signal to the first amplifier (103) by the first directional coupler (101), and sending a second signal to the second amplifier (100) by the second directional coupler (102); amplifying the first signal by the first amplifier (103) and sending the amplified signal to the first antenna (116), and amplifying the second signal by the second amplifier (100) and sending the amplified signal to the second antenna (117); and
sending the amplified first signal by the first antenna (116), and sending the amplified second signal by the second antenna (117).

10. The method according to any of claims 7-9, further comprising, before the above-mentioned steps, a step of:
determining, according to the signals from the first directional coupler (101) and the second directional coupler (102), which one of states consisting of a single-path signal-sending state, a signal-receiving state of the multi-input multi-output system and a multi-path signal-sending state the multi-input multi-output system is in.

## Patentansprüche

1. MIMO (Multi-Input Multi-Output)-System, aufweisend:
einen ersten Richtkoppler (101) und einen zweiten Richtkoppler (102), von denen einer angeordnet ist, um Signale zu einem Splitter (110) auszurichten für den Fall, dass Signale von dem MIMO-System auf einem einzigen Pfad gesendet werden;
den Splitter (110), der zum Verteilen der Signale ausgehend von dem ersten Richtkoppler (101) oder dem zweiten Richtkoppler (102) auf zwei Pfade angeordnet ist und der zum Senden der zwei Signalpfade zu einem ersten Verstärker (103) bzw. zu einem zweiten Verstärker (100) angeordnet ist;
den ersten Verstärker (103) bzw. den zweiten Verstärker (100), die dazu angeordnet sind, die Signale, die jeweils empfangen wurden, zu verstärken und um die verstärkten Signale zu einem Kombinator (112) zu senden; und
den Kombinator (112), der dazu angeordnet ist, die Signale, die von dem ersten Verstärker (103) und dem zweiten Verstärker (100) empfangen wurden, zu kombinieren und um die kombinierten Signale zu senden.

2. System nach Anspruch 1, ferner umfassend:
eine erste Antenne (116) und eine zweite Antenne (117), von denen eine dazu angeordnet ist, die Signale, die von dem Kombinator (112) kombiniert wurden, zu senden.

3. System nach Anspruch 2, wobei in dem Fall, in dem das MIMO-System Signale empfängt, die Signale durch die erste Antenne (116) und/oder die zweite Antenne (117) empfangen werden, das System ferner aufweist:
einen ersten rauscharmen Verstärker (106), der dazu angeordnet ist, eine rauscharme Verstärkung für die Signale durchzuführen, die von der ersten Antenne (116) empfangen wurden, und die verstärkten Signale zu dem ersten Richtkoppler (101) zu senden; und
einen zweiten rauscharmen Verstärker (108), der dazu angeordnet ist, eine rauscharme Verstärkung für die Signale durchzuführen, die von der zweiten Antenne (117) empfangen wurden, und die verstärkten Signale zu dem zweiten Richtkoppler (102) zu senden.

4. System nach Anspruch 2, wobei in dem Fall, in dem das MIMO-System Signale auf mehreren Pfade aussendet,
der erste Richtkoppler (101) ferner dazu angeordnet ist, ein erstes Signal zu dem ersten Verstärker (103) zu senden, und der zweite Richtkoppler (102) ferner dazu angeordnet ist, ein zweites Signal zu dem zweiten Verstärker (100) zu senden;
der erste Verstärker (103) ferner dazu angeordnet ist, das empfangene erste Signal zu verstärken und das verstärkte Signal an die erste Antenne (116) zu senden, und der zweite Verstärker (100) ferner dazu angeordnet ist, um das empfangene zweite Signal zu verstärken und das verstärkte Signal an die zweite Antenne (117) zu senden; und
die erste Antenne (116) ferner dazu angeordnet ist, das verstärkte erste Signal auszusenden, und die zweite Antenne (117) ferner dazu angeordnet ist, das verstärkte zweite Signal auszusenden.

5. System nach einem der Ansprüche 1 bis 4, ferner umfassend:
ein den Betriebsmodus bestimmendes Modul, das dazu angeordnet ist, gemäß den Signalen von dem ersten Richtkoppler (101) und von dem zweiten Richtkoppler (102) zu bestimmen, in welchem der Zustände, umfassend einen Einzelpfad Signal-Sende Zustand, einen Signal-Empfangszustand des MIMO-Systems und einen Mehrfachpfad Signal-Sende Zustand, sich das MIMO-System befindet.

6. System nach Anspruch 5, wobei das Modul zur Bestimmung des Betriebsmodus einen ersten Detektor (118), einen zweiten Detektor (119) und ein Logikmodul (105) aufweist, wobei
der erste Detektor (118) dazu angeordnet ist, eine Ausgabe des ersten Richtkopfs (101) zu detektieren und ein Detektionsergebnis an das Logikmodul (105) zu senden;
der zweite Detektor (119) dazu angeordnet ist, eine Ausgabe des zweiten Richtkopplers (102) zu detektieren und ein Detektionsergebnis an das Logikmodul (105) zu senden; und
das Logikmodul (105) dazu angeordnet ist, gemäß den Detektionsergebnissen von dem ersten Detektor (118) und dem zweiten Detektor (119) zu bestimmen, in welchem der Zustände, umfassend einen Einzelpfad Signal-Sende Zustand, einen Signal-Empfangszustand des MIMO-Systems und einen Mehrfachpfad Signal-Sende Zustand, sich das MIMO-System befindet.

7. MIMO-Verfahren, umfassend die nachfolgenden Schritte:
in dem Fall, in dem Signale von einem MIMO-System auf einem einzelnen Pfad ausgesendet werden, Ausrichten der Signale zu einem Splitter (110) mittels eines ersten Richtkopplers (101) oder eines zweiten Richtkopplers (102);
Verteilen der Signale auf zwei Pfade mittels des Splitters (110) und Senden der zwei Signalpfade zu einem ersten Verstärker (103) bzw. einem zweiten Verstärker (100);
Verstärken der erhaltenen Signale durch den ersten Verstärker (103) bzw. den zweiten Verstärker (100), und Senden der verstärkten Signale zu einem Kombinator (112);
Kombinieren der Signale von dem ersten Verstärker (103) und dem zweiten Verstärker (100) mittels des Kombinators (112); und
Aussenden mittels einer ersten Antenne (116) oder einer zweiten Antenne (117) der Signale, die mittels des Kombinators (112) kombiniert wurden.

8. Verfahren nach Anspruch 7, ferner umfassend: in dem Fall, in dem das MIMO-System Signale empfängt,
Empfangen der Signale mittels der ersten Antenne (116) und/oder der zweiten Antenne (117);
Durchführen einer rauscharmen Verstärkung für die Signale, die mittels der ersten Antenne (116) empfangen wurden, mittels eines ersten rauscharmen Verstärkers (106) und Senden der verstärkten Signale zu dem ersten Richtkoppler (101); und
Durchführen einer rauscharmen Verstärkung für die Signale, die von der zweiten Antenne (117) empfangen wurden, mittels eines zweiten rauscharmen Verstärkers (108) und Senden der verstärkten Signale zu dem zweiten Richtkoppler (102).

9. Verfahren nach Anspruch 7, ferner aufweisend: in dem Fall, in dem das MIMO-System Signale auf mehreren Pfaden aussendet,
Senden eines ersten Signals zu dem ersten Verstärker (103) mittels des ersten Richtkopplers (101), und Senden eines zweiten Signals zu dem zweiten Verstärker (100) mittels des zweiten Richtkopplers (102);
Verstärken des ersten Signals mittels des ersten Verstärkers (103) und Senden des verstärkten Signals zu der ersten Antenne (116), und Verstärken des zweiten Signals mittels des zweiten Verstärkers (100) und Senden des verstärkten Signals zu der zweiten Antenne (117); und
Senden des verstärkten ersten Signals mittels der ersten Antenne (116), und Senden des verstärkten zweiten Signals mittels der zweiten Antenne (117).

10. Verfahren nach einem der Ansprüche 7 bis 9, ferner umfassend vor den vorstehenden Schritten einen Schritt:
Bestimmen, gemäß den Signalen von dem ersten Richtkoppler (101) und dem zweiten Richtkoppler (102), in welchem der Zustände, umfassend einen Einzelpfad Signal-Sende Zustand, einen Signal-Empfangszustand des MIMO-Systems und einen Mehrfachpfad Signal-Sende Zustand, sich das MIMO-System befindet.

## Revendications

1. Système multi-entrées/multi-sorties comprenant :
un premier coupleur directionnel (101) et un second coupleur directionnel (102), dont l'un est agencé pour diriger des signaux vers un diviseur (110) dans le cas où des signaux sont émis par le système multi-entrées/multi-sorties dans une voie unique ;
le diviseur (110) agencé pour diviser les signaux du premier coupleur directionnel (101) ou du second coupleur directionnel (102), en deux voies et envoyer les deux voies de signaux respectivement vers un premier amplificateur (103) et un second amplificateur (100) ;
le premier amplificateur (103) et le second amplificateur (100), qui sont agencés pour amplifier les signaux reçus respectivement et pour envoyer les signaux amplifiés respectivement sur un coupleur (112), et
le coupleur (112) agencé pour combiner les signaux reçus du premier amplificateur (103) et du second amplificateur (100) et pour envoyer les signaux combinés.

2. Système selon la revendication 1, comportant en outre :
une première antenne (116) et une seconde antenne (117), dont l'une est agencée pour envoyer les signaux combinés par le coupleur (112).

3. Système selon la revendication 2, dans lequel, au cas où le système multi-entrées/multi-sorties reçoit des signaux, ces signaux sont réceptionnés par la première antenne (116) et/ou par la seconde antenne (117), le système comporte en outre :
un premier amplificateur à faible bruit (106) agencé pour évacuer une amplification à faible bruit pour les signaux captés par la première antenne (116) et pour envoyer les signaux amplifiés au premier coupleur directionnel (101), et
un second amplificateur à faible bruit (108) agencé pour évacuer une amplification à faible bruit pour les signaux captés par la seconde antenne (117) et pour envoyer les signaux amplifiés au second coupleur directionnel (102).

4. Système selon la revendication 2, dans lequel, au cas où le système multi-entrées/multi-sorties émet des signaux de sortie sur des voies multiples,
le premier coupleur directionnel (101) est en outre agencé pour transmettre un premier signal au premier amplificateur (103), et le second coupleur directionnel (102) est en outre agencé pour transmettre un second signal au second amplificateur (100) ;
le premier amplificateur (103) est en outre agencé pour amplifier le premier signal reçu et pour envoyer le signal amplifié vers la première antenne (116), et le second amplificateur (100) est en outre agencé pour amplifier le second signal reçu et pour envoyer le signal amplifié vers la seconde antenne (117) ; et la première antenne (116) est en outre agencée pour émettre le premier signal amplifié et la seconde antenne (117) est en outre agencée pour émettre le second signal amplifié.

5. Système selon l'une quelconque des revendications 1-4, comprenant en outre :
un module de détermination de mode agencé pour déterminer, selon les signaux provenant du premier coupleur directionnel (101) et du second coupleur directionnel (102), sur lequel des états, comprenant un état d'émission de signal sur une voie unique, un état de réception de signal du système multi-entrées/multi-sorties et un état de transmission de signal sur des voies multiples, le système multi-entrées/multi-sorties est réglé.

6. Système selon la revendication 5, dans lequel, le module de détermination de mode comporte un premier détecteur (118), un second détecteur (119) et un module logique (105), dans lequel
le premier détecteur (118) est agencé pour détecter une émission du premier coupleur directionnel (101) et pour envoyer un résultat de détection au module logique (105) ;
le second détecteur (119) est agencé pour détecter une émission du second coupleur directionnel (102) et pour envoyer un résultat de détection au module logique (105) ; et
le module logique (105) est agencé pour déterminer, en fonction des résultats de détection des premier (118) et second (119) détecteurs, sur lequel des états, comprenant un état d'émission de signal sur une voie unique, un état de réception de signal du système multi-entrées/multi-sorties et un état de transmission de signal sur des voies multiples, le système multi-entrées/multi-sorties est réglé..

7. Procédé multi-entrées/multi-sorties comprenant les étapes suivantes :
au cas où des signaux sont transmis par un système multi-entrées/multi-sorties sur une voie unique, la direction des signaux sur un diviseur (110) par l'un des premier coupleur directionnel (101) et second coupleur directionnel (102) ;
la division des signaux en deux voies par le diviseur (110) et la transmission des deux voies de signaux respectivement vers un premier amplificateur (103) et un second amplificateur (100) ;
l'amplification des signaux reçus par le premier amplificateur (103) et le second amplificateur (100) respectivement, et la transmission des signaux amplifiés vers un coupleur (112) ;
le couplage des signaux du premier amplificateur (103) et du second amplificateur (100) par le coupleur (112) ; et
la transmission, par l'une des première antenne (116) et des seconde antenne (117), des signaux combinés par le coupleur (112).

8. Procédé selon la revendication 7, comprenant en outre : au cas où le système multi-entrées/multi-sorties reçoit des signaux,
la réception des signaux par la première antenne (116) et/ou la seconde antenne (117),
l'évacuation, par un premier amplificateur (106) à faible bruit, d'une amplification à faible bruit pour les signaux reçus par la première antenne (116) et l'envoi des signaux amplifiés au premier coupleur directionnel (101), et l'évacuation, par un second amplificateur (108) à faible bruit, d'une amplification à faible bruit pour les signaux reçus par la seconde antenne (117) et l'envoi des signaux amplifiés au second coupleur directionnel (102).

9. Procédé selon la revendication 7, comprenant en outre : au cas où le système multi-entrées/multi-sorties émet des signaux dans des voies multiples, l'envoi d'un premier signal au premier amplificateur (103) par le premier coupleur directionnel (101) et l'envoi d'un second signal au second amplificateur (100) par le second coupleur directionnel (102),
l'amplification du premier signal par le premier amplificateur (103) et la transmission du signal amplifié à la première antenne (116), et l'amplification du second signal par le second amplificateur (100) et la transmission du signal amplifié à la seconde antenne (117), et
l'envoi du premier signal amplifié par la première antenne (116) et l'envoi du second signal amplifié par la seconde antenne (117).

10. Procédé selon l'une quelconque des revendications 7-9, comprenant en outre, antérieurement aux étapes précédentes, une étape consistant à :
déterminer, selon les signaux provenant du premier coupleur directionnel (101) et du second coupleur directionnel (102), sur lequel des états, comprenant un état d'émission de signal sur une voie unique, un état de réception de signal du système multi-entrées/multi-sorties et un état de transmission de signal sur des voies multiples, le système multi-entrées/multi-sorties est réglé.
